# EUROPEAN PATENT APPLICATION

(11) **EP 0 992 695 A1**
(43) Date of publication of application: **12.04.2000**
(21) Application number: 98924605.3
(22) Date of filing: 12.06.1998
(51) Int. Cl.: F16B 39/14

(54) **LOCK NUT AND ATTACHING REMOVING TOOL FOR SAME**

(30) Priority: 23.06.1997 JP 18306797
(71) Applicant: Kioka Gaishi Kogyo K.K., Osaka 598-0045 (JP)
(72) Inventor: KIOKA, Hiromichi, Izumisano-shi, Osaka 598-0045 (JP)
(74) Representative: Wilhelm & Dauster Patentanwälte European Patent Attorneys
(86) International application number: JP9802607
(87) International publication number: WO9859178

(57) **Abstract**

A lock nut characterized in that a plurality of flexible vanes are formed by forming an elastic plate material to have a concave-shape at a central cross section such that its outer peripheral side plate portion is polygonal in shape like nut and its lower, flat plate portion is divided in a circumferential direction of a central nut hole of a nut, warping respective tips of the flexible vanes toward inside of a concave-shaped cross section to provide a nut thread in which the vane tips engages a bolt for integration therewith, and forming downwardly extending portions downwardly of roots of the respective flexible vanes in a fastening direction so that contact pressures on the downwardly extending portions cause the flexible vanes to be flattened relative to the bolt to fasten the nut.

## Description

### TECHNICAL FIELD THE INVENTION BELONGS TO

The present invention relates to a lock nut, a fixing tool including the lock nut, a bolt and a first-in nut, and an attaching/removing tool especially for the lock nut.

### BACKGROUND ART

Some nuts of the prior art have the locking effects. However, these lock nuts have not reached yet at a level to have a sufficient and reliable looseness preventing effects. By strengthening the inspection and management systems, therefore, it has been needed to compensate for the unstable factors such as unforeseen accidents due to the looseness or coming-out of the nuts or cotter pins.

### OBJECTS OF THE INVENTION

The present invention has been conceived to solve such problems of the prior art and has an object to provide a lock nut of a high reliability for safety, which is enabled to require no looseness inspection of the nut by completely eliminating the looseness of the lock nut itself and the looseness of a first-in nut inserted prior to the lock nut, and a fixing tool utilizing the same.

On the other hand, the present invention has an object to provide a nut attaching/removing tool which makes it possible to attach/remove the aforementioned lock nut easily and to reuse the nut;

### SUMMARY OF THE INVENTION

According to the present invention, there is provided a lock nut characterized: in that a plurality of flexible vanes are formed by forming an elastic plate material to have a concave shape at a central cross section such that its outer peripheral side plate portion is polygonal in shape like a nut and such that its lower, flat plate portion is divided in a circumferential direction of a central nut hole of a nut; in that individual tips of the flexible vanes are warped toward the inside of a concave-shaped cross section to provide a nut thread in which the vane tips engage with a bolt for integration therewith; and in that downwardly extending portions (of a concave shape, for example) are formed downwardly of roots of the individual flexible vanes in a fastening direction so that contact pressures on the downwardly extending portions cause the flexible vanes to be flattened relative to the bolt to fasten the nut.

In a preferred mode of the lock nut of the present invention, the vane tips of the flexible vanes are shaped to engage with the single crest or root of thread, a plurality of thread crests or roots, or both the thread crest and root of a bolt, and the elastic plate material is constructed of a simple substance or a composite of metals, hard resins or ceramic materials and is especially coated with a colored soft resin.

According to the present invention, on the other hand, there is provided a fixing tool comprising: the aforementioned lock nut; a bolt having a thread crest or root constructed to engage with said lock nut; and, if necessary, a first-in nut fastened on said bolt prior to said lock nut and adapted to establish the contact pressures on said extending portions as said lock nut is fastened.

According to the present invention, on the other hand, there is provided a nut attaching/removing tool comprising: a push pipe shank having a pipe hole for inserting a bolt thereinto; and a handle for turning the push pipe shank, characterized in that said push pipe shank is provided: at its one end with an especial removing tool having a plurality of detents for engaging with the gaps between the individual flexible vanes of said lock nut; and at its other end with an especial fastening tool having a socket for engaging with the polygonal shape of the outer circumference of said lock nut.

According to the present invention, on the other hand, there is provided a nut attaching/removing tool comprising: a push pipe shank having a pipe hole for inserting a bolt thereinto; and a handle for turning the push pipe shank, characterized in that said push pipe shank is provided at its one end with both a plurality of detents for engaging with the gaps between the individual flexible vanes of said lock nut and a socket for engaging with the polygonal shape of the outer circumference of said lock nut.

### BRIEF DESCRIPTION OF THE DRAWINGS

Fig. 1 is a top plan view showing a lock nut of the invention.
Fig. 2 is a side elevation showing the lock nut of the invention.
Fig. 3 is an enlarged sectional view along line III - III of Fig. 1.
Fig. 4 is a sectional view of a lefthand half showing the state in which the lock nut of Fig. 1 is fastened on a bolt.
Fig. 5 is a sectional view of the lefthand half showing the lock nut (the vane tips of which engage with one crest of bolt thread) of the invention.
Fig. 6 is a sectional view of the lefthand half showing the state in which the lock nut of Fig. 5 is fastened on the bolt.
Fig. 7 is a sectional view of the lefthand half showing the state in which the lock nut (the vane tips of which engage with two crests of bolt thread) of the invention is fastened on a bolt.
Fig. 8 is a top plan view showing a lock nut (the vane tips of which engage with both crest and root of bolt thread) of the invention.
Fig. 9 is an enlarged sectional view along line IX - IX of Fig. 8.
Fig. 10 is a sectional view of a lefthand half showing the state in which the lock nut of Fig. 8 is fastened on a bolt.
Fig. 11 is an explanatory diagram showing a lock nut (the vane tips of which engage with both crest and root of bolt thread) of the invention.
Fig. 12 is a sectional side elevation of an essential portion showing the used state of a nut attaching/removing tool of the invention.
Fig. 13 is a section along line XIII - XIII of Fig. 12.
Fig. 14 is a partial side elevation showing the leading end of an especial removing tool portion of Fig. 12.
Fig. 15 is a view showing a portion, as taken from above, of the especial fastening tool portion of Fig. 12.
Fig. 16 is a partial side elevation showing another example of the leading end of the especial removing tool portion of Fig. 12.

### DETAILED DESCRIPTION OF THE INVENTION

The present invention will be described in the following with reference to the accompanying drawings, but this description merely exemplifies the invention and should not limit it any more.

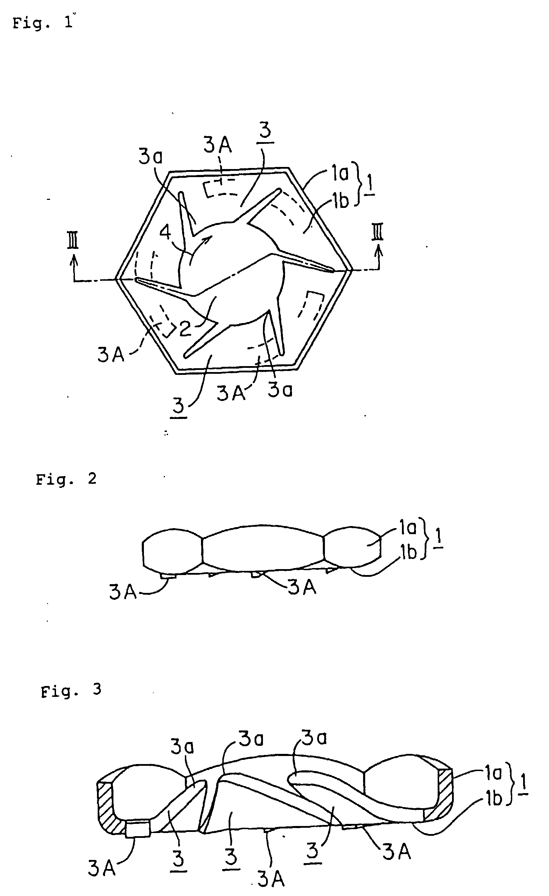

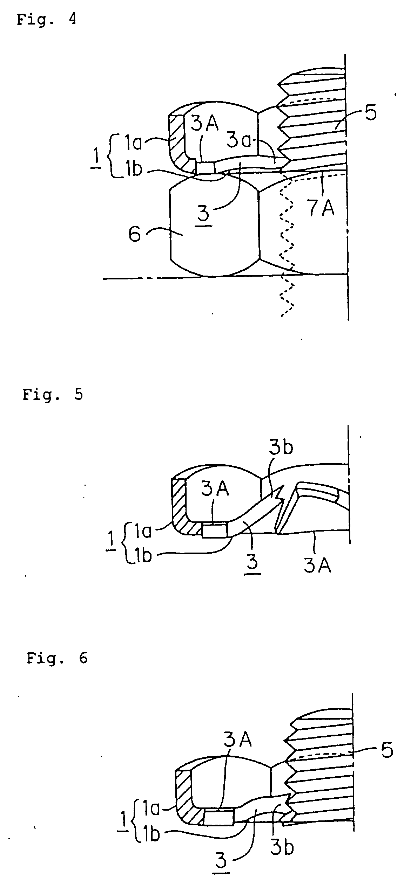

First of all, one example of the lock nut of the invention will be described with reference to Figs. 1 to 4. Fig. 1 is a top plan view of the lock nut; Fig. 2 is a side elevation, as taken from sideway, of the lock nut of Fig. 1; Fig. 3 is an enlarged sectional view along line III - III of Fig. 1; and Fig. 4 is a sectional view of a lefthand half showing the state in which the lock nut is fastened on a bolt.

In these Figures, reference numeral 1 designates an elastic plate material which is formed to have a concave shape in a central cross section (III - III) such that its outer peripheral side plate portion 1a is formed into a polygonal (or hexagonal, as shown) shape of a nut and such that its lower, flat plate portion 1b has a nut hole 2 at its center. Numeral 3 designates a plurality of (or six, as shown) flexible vanes which are formed by dividing the lower, flat plate portion 2 in a circumferential direction of the nut hole 2, and its individual tips 3a are directed a little more upward of a fastening direction 4 than its center and are warped toward the inside of the concave-shaped cross section. Numeral 3A designates downwardly extending portions which are formed downwardly of the roots of the individual flexible vanes 3 in a fastening direction 4, so that they construct detents which are recessed over parallel regions, as indicated by dotted lines in Fig. 1, and protruded downward.

Here will be described the actions for fastening the aforementioned lock nut, as shown in Figs. 1 to 3, as one of double nuts on a bolt 5, as shown in Fig. 4.

When the lock nut is positioned on the bolt 5 and turned in its advancing direction, as indicated by arrow 4, it goes down along the bolt 5 while rattling in the state of Fig. 3 until it rides on a first-in nut 6. In this state, the individual vane tips 3a of the lock nut loosely engage with the thread crest of the bolt 5. When the outer peripheral side plate portion 1a of the lock nut is turned by the especial fastening tool or the like to fasten the nut, moreover, the plurality of flexible vanes 3 come at the bottoms of their extending portions 3A into strong contact with the first-in nut 6 so that the individual flexible vanes 3 are individually warped on the nut 6 to flatten their individual tips 3a with respect to the bolt 5. When the lock nut is further fastened continuously, the flexible vanes 3 are warped to push their tips 3a into the root of the thread so that the nut cannot be fastened any more from the state shown in Fig. 4. In this state shown in Fig. 4, the warping forces of the flexible vanes 3 act at a right angle on the root of the thread so that they fasten the bolt 5 in a plurality of circumferential directions. As a result, a high fastening/gripping force on the bolt 5 can be established to integrate the nut and the bolt. Even if a loosening force acts on the nut in this state, moreover, the loosening force on the flexible vanes 3 doubles the gripping force on the bolt because their own warpage deforms in the direction for the gripping force to act toward the center of the bolt. By the deformation of the flexible vanes 3 especially due to the extending portions 3A, the bolt can be firmly locked. Since this locking force acts on each of the individual flexible vanes 3, moreover, the locking force is not multiplied by intense vibrations of low or high frequencies, if applied forward or backward to the bolt or the nut, in the inertially fastening direction but not in the loosening direction, so that the nut is reliably locked.

When the centering is thus achieved by finally fastening the plurality of flexible vanes 3, there are small differences in fact in the flexible vanes 3 and the leads in the nut so that the vibration resisting forces are different for the individual flexible vanes 3 thereby to enhance the effect for preventing the nut from becoming loose.

Since the bolt 5 has different thicknesses from those of normal sizes to those plates with molten zinc, on the other hand, it is necessary to prepare lock nuts of sizes for covering the differences. It is, therefore, more effective to use the fixing tools which are set with: the lock nuts; and the bolts having thread crests and roots to engage with the lock nuts; and, if necessary, the first-in nuts which are fastened on the aforementioned bolts prior to the aforementioned lock nuts and adapted to establish contact pressures on the aforementioned extending portions as the aforementioned lock nuts are fastened.

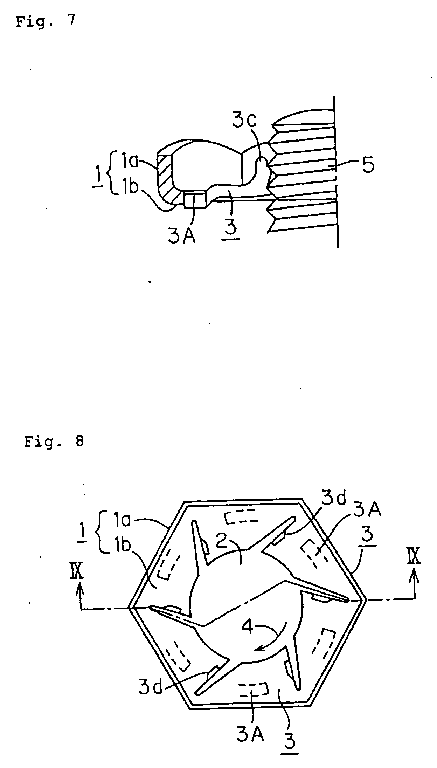

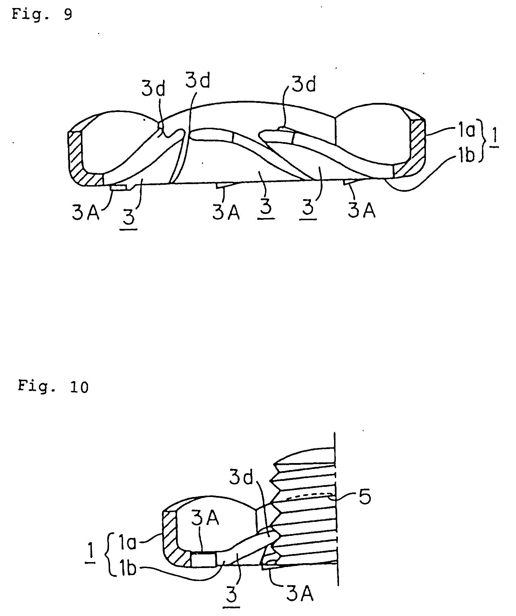

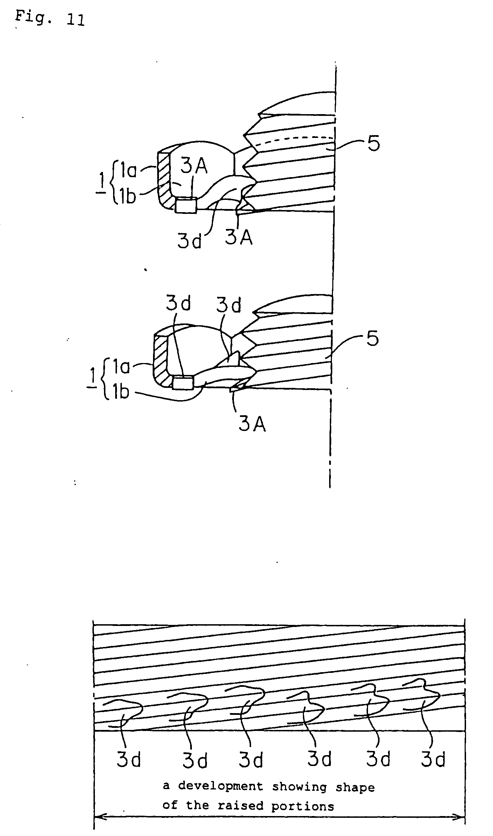

In the embodiment of the foregoing lock nut, there has been exemplified by a shape in which the vane tips 3a of the flexible vanes 3 engage with the thread root of the bolt 5. However, the shape may be modified such that vane tips 3b engage with the thread crest of the bolt 5, as shown in Figs. 5 and 6, or such that vane tips 3c simultaneously engage with a plurality of (or two, as shown) of the bolt 5 as shown in Fig. 7. Alternatively, as shown in Figs. 8 to 10, the flexible vanes 3 may be partially raised to form raised portions 3d so that they may engage with both the thread crests and roots of the bolt 5. Although not shown, on the other hand, the vane tips 3c may be shaped to simultaneously engage with a plurality of thread crests and roots of the bolt. On the other hand, the extending portions 3A shown in Figs. 8 and 9 may be located in the flexible vanes 3. Here, Fig. 11 presents views including a development showing another shape of the raised portions 3d which engage with both the thread crests and roots of the bolt 5.

The foregoing lock nuts thus exemplified can keep complete gas-tightness, if the elastic plate material 1 is coated with a soft resin, to reduce the whitening of the plated zinc of the bolt and the first-in nut due to acid rain and to improve the vibration resistance so that their applications are remarkably widened. Moreover, the colored resin-coated nuts can be easily inspected because their states can be checked at a glance. Since the lock nut of the invention has a concave-shaped cross section, this shape allows the easy check at a glance. By utilizing the inner face structure which makes the pigment hard to leave, however, the lock nut can be inspected with colors and can also be easily inspected at a distant point with the reflection on the curved face due to a warpage.

The lock nuts thus far described employ the elastic plate material 1 as their base material, and this elastic plate material can be made of a simple substance or a composite of metals, hard resins or ceramic materials.

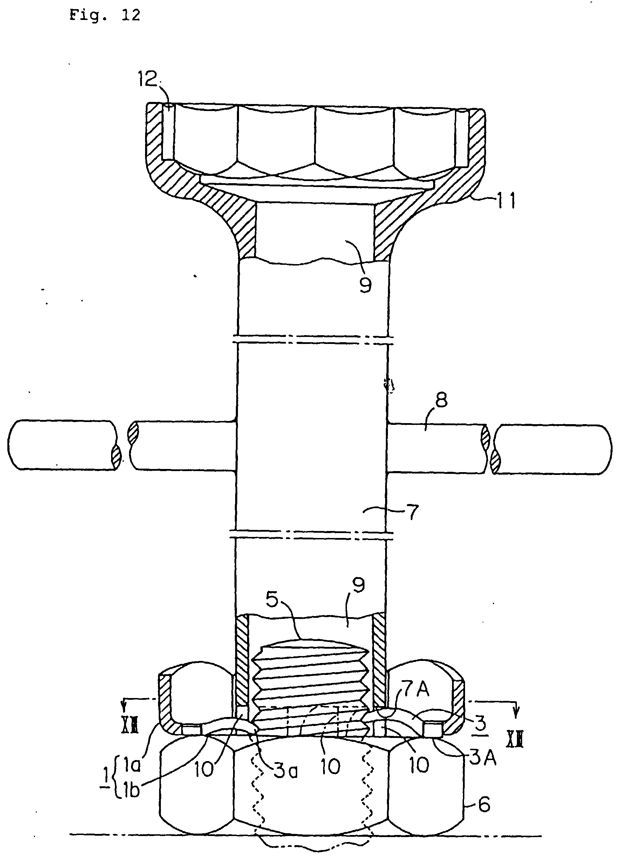

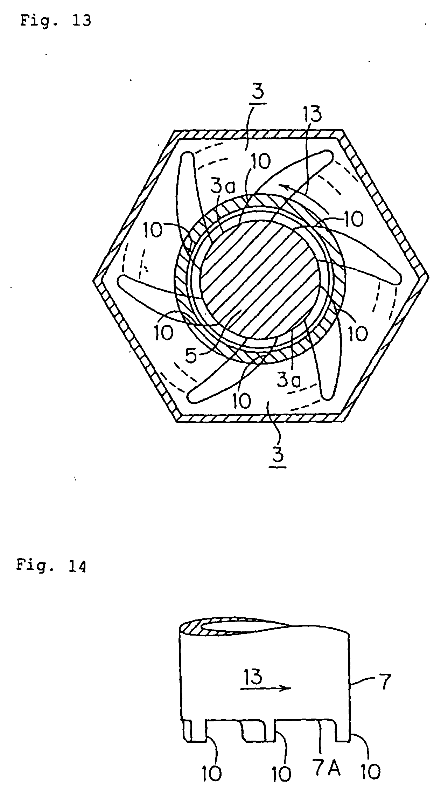

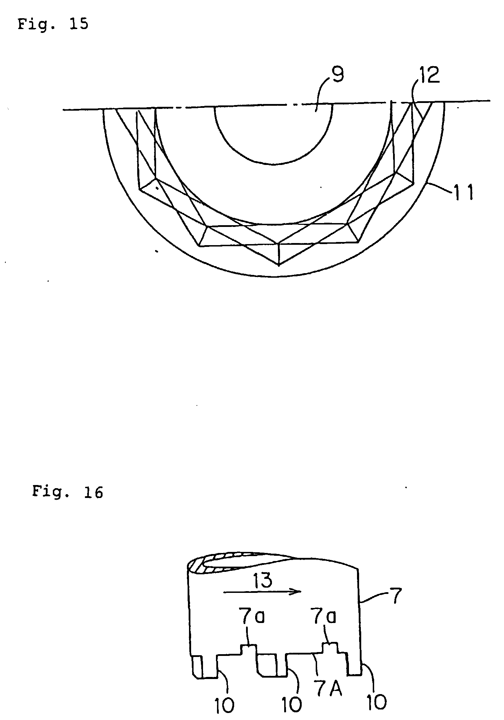

Next, one example of a nut attaching/removing tool for the lock nut of the present invention will be described with reference to Figs. 12 to 15. Fig. 12 is a sectional side elevation of an essential portion showing the used state of the nut attaching/removing tool at a loosening time; Fig. 13 is a sectional view along line XIII - XIII of Fig. 12; Fig. 14 is a side elevation of a portion showing the leading end of an especial removing tool portion of Fig. 12; and Fig. 15 is a diagram of a portion, as viewed from above, of the especial fastening tool portion of Fig. 12. The description of portions identical or corresponding to those of the foregoing lock nuts will be omitted by designating them by the common reference numerals.

In these Figures: reference numeral 7 designates a push pipe shank to be turned by a handle 8; numeral 9 a bolt release pipe hole formed in the pipe shank 7; numeral 10 a plurality of (or six, as shown) detents which are so extended from the push face 7A of the push pipe shank 7 along the whole circumstance as to enter the gaps between the individual flexible vanes 3 thereby to construct the especial removing tool at the lower end of the pipe shank 7. Numeral 11 designates a nut box having a socket portion 12 for fitting the nut therein thereby to construct the especial fastening tool at the upper end of the push pipe shank 7. Here, a tool having the functions of the aforementioned especial removing tool and especial fastening tool may be provided on one side or formed into a socket-wrench, although not shown.

When a nut is to be removed by using this nut attaching/removing tool, the especial removing tool portion may be inserted from above into the concave-shaped section of the nut, as shown in Fig. 12, to fit the individual detents 10 in the gaps between the flexible vanes 3, and the handle 8 may be turned in the direction of arrow 13 while pushing the push pipe shank 7 to hold the individual flexible vanes 3 with their push faces 7A. As the detents 10 are turned in the returning direction of the arrow 13, the flexible vanes 3 are released from the force of their tips 3a to grip the bolt 5 while receiving a component force to expand outward from the inside, so that the nut can be easily removed. As the gripping force becomes weak, the individual flexible vanes 3 lose their strain-stress and restore their original shapes thereby to make the reuse possible.

Here, for the lock nuts of Figs. 8 to 11 having the raised portions 3d, recesses 7a sized to receive the raised portions 3d may be formed in the push face 7A of the push pipe shank 7, as shown in Fig. 16.

### EFFECTS OF THE INVENTION

According to the lock nut of the present invention, as has been described hereinbefore, even if the looseness of the nut is to be caused, the loosening force is completely canceled, when it acts on the flexible vanes of the nut in which the screw lead angle by the bolt pitch is turned into the gripping force of the bolt, by the bolt gripping force which is doubled in the direction to distort the flexible vanes by the frictional force of the vane tips. As a result, the inspection of the looseness of the nut is eliminated to provide an effect that a high reliability for safety can be achieved.

According to the especial nut attaching/removing tool for the lock nut of the present invention, on the other hand, there is provided an effect that the lock nut can be simply attached/removed so that it can be reused.

## Claims

1. A lock nut characterized: in that a plurality of flexible vanes are formed by forming an elastic plate material to have a concave shape at a central cross section such that its outer peripheral side plate portion is polygonal in shape like a nut and such that its lower, flat plate portion is divided in a circumferential direction of a central nut hole of a nut; in that individual tips of the flexible vanes are warped toward the inside of a concave-shaped cross section to provide a nut thread in which the vane tips engage with a bolt for integration therewith; and in that downwardly extending portions are formed downwardly of roots of the individual flexible vanes in a fastening direction so that contact pressures on the downwardly extending portions cause the flexible vanes to be flattened relative to the bolt to fasten the nut.

2. A lock nut as set forth in Claim 1 characterized in that the vane tips of the flexible vanes are shaped to engage with a crest or root of thread.

3. A lock nut as set forth in Claim 1 characterized in that the vane tips of the flexible vanes are shaped to engage with a plurality of thread crests or roots.

4. A lock nut as set forth in Claim 1 characterized in that the vane tips of the flexible vanes are shaped to engage with both the thread crest and root of a bolt.

5. A lock nut as set forth in Claim 1 characterized in that the elastic plate material is constructed of a simple substance or a composite of metals, hard resins or ceramic materials.

6. A lock nut as set forth in Claim 1 characterized in that the elastic plate material is coated with a soft resin.

7. A lock nut as set forth in Claim 6 characterized in that the soft resin is colored.

8. A lock nut as set forth in Claim 1 characterized in that the extending portion has a concave shape.

9. A fixing tool comprising: the lock nut mentioned in any of Claims 1 to 8; a bolt having a thread crest or root constructed to engage with said lock nut.

10. A fixing tool comprising: the lock nut mentioned in any of Claims 1 to 8; a bolt having a thread crest or root constructed to engage with said lock nut; a first-in nut fastened on said bolt prior to said lock nut and adapted to establish the contact pressures on said extending portions as said lock nut is fastened.

11. A nut attaching / removing tool comprising: a push pipe shank having a pipe hole for inserting a bolt thereinto; and a handle for turning the push pipe shank, characterized in that said push pipe shank is provided: at its one end with an especial removing tool having a plurality of detents for engaging with the gaps between the individual flexible vanes of the lock nut mentioned in any of Claims 1 to 8; and at its other end with an especial fastening tool having a socket for engaging with the polygonal shape of the outer circumference of the lock nut mentioned in any of Claims 1 to 8.

12. A nut attaching/removing tool comprising: a push pipe shank having a pipe hole for inserting a bolt thereinto; and a handle for turning the push pipe shank, characterized in that said push pipe shank is provided at its one end with both a plurality of detents for engaging with the gaps between the individual flexible vanes of the lock nut mentioned in any of Claims 1 to 8 and a socket for engaging with the polygonal shape of the outer circumference of the lock nut mentioned in any of Claims 1 to 8.
